# FASCICULE DE BREVET EUROPEEN

(11) **EP 2 935 642 B1**
(45) Date de publication et mention de la délivrance du brevet: **09.11.2016**
(21) Numéro de dépôt: 13805406.9
(22) Date de dépôt: 16.12.2013
(51) Int. Cl.: C23C 8/08, D07B 1/06, B60C 9/00

(54) **SULFURATION DE SURFACE D'UN CORPS METALLIQUE PAR PYROLYSE PAR PROJECTION DE FLAMME**
OBERFLÄCHENSULFURIERUNG EINES METALLSTÜCKS DURCH FLAMMSPRÜHPYROLYSE
SURFACE SULFURIZATION OF A METAL BODY BY FLAME SPRAY PYROLYSIS

(30) Priorité: 20.12.2012 FR 1262411
(43) Date de publication de la demande: 28.10.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: GRASS, Robert, Nikolaus, CH-8057 Zurich (CH); FEDURCO, Milan, F-63040 Clermont-ferrand Cedex 9 (FR); DELFINO, Antonio, F-63040 Clermont-ferrand Cedex 9 (FR); MERALDI, Jean Paul, CH-8049 Zurich (CH); STARK, Wendelin, Jan, CH-8049 Zurich (CH)
(74) Mandataire: Ribière, Joel
(86) Numéro de dépôt international: PCT/EP2013/076713
(87) Numéro de publication internationale: WO 2014/095730

(56) Documents cités:
- EP-A1- 0 383 150
- WO-A1-2011/076746
- US-A- 4 333 787
- US-A- 4 381 204
- US-A1- 2011 244 139

## Description

### 1. DOMAINE DE L'INVENTION

La présente invention est relative aux procédés de traitement de surface de métaux, en particulier de corps métalliques utilisables comme renforts dans les composites métal / caoutchouc destinés notamment à la fabrication d'articles en caoutchouc tels que des pneumatiques.

Elle est plus particulièrement relative aux procédés de sulfuration de surface de ces métaux en vue de permettre leur adhésion ultérieure à des polymères éthyléniquement insaturés tels que du caoutchouc naturel.

### 2. ETAT DE LA TECHNIQUE

Les composites de type métal / caoutchouc, en particulier pour pneumatiques, sont bien connus. Ils sont généralement constitués d'une matrice en caoutchouc insaturé généralement diénique, réticulable au soufre, comportant des éléments de renforcement (ou « renforts ») métalliques tels que des fils ou câbles en acier au carbone.

Soumis à des contraintes très importantes lors du roulage des pneumatiques, notamment à des compressions, flexions ou variations de courbure répétées, ces composites doivent de manière connue satisfaire à un grand nombre de critères techniques, parfois contradictoires, tels qu'uniformité, flexibilité, endurance en flexion et en compression, résistance à la traction, à l'usure et à la corrosion, et maintenir ces performances à un niveau très élevé aussi longtemps que possible.

On comprend aisément que l'interphase adhésive entre le caoutchouc et ces renforts joue un rôle prépondérant dans la pérennité de ces performances.

Le procédé traditionnel pour relier les compositions de caoutchouc à de l'acier au carbone consiste à revêtir la surface de l'acier avec du laiton (alliage cuivre-zinc), la liaison entre l'acier et la matrice de caoutchouc étant assurée par sulfuration du laiton (formation de sulfures de zinc et de cuivre) lors de la vulcanisation (c'est-à-dire réticulation tridimensionnelle par le soufre) ultérieure de la matrice de caoutchouc. Ce processus de sulfuration se traduit en particulier par la formation in-situ de clusters métalliques à la surface du laiton appelés « dendrites », autour desquels on suppose que vient s'ancrer (par ancrage mécanique et chimique) la matrice de caoutchouc lors de la vulcanisation.

En outre, on incorpore généralement dans cette matrice de caoutchouc des sels organiques ou des complexes de cobalt en tant qu'additifs promoteurs d'adhésion. On sait que le cobalt participe activement non seulement au processus de vulcanisation du caoutchouc, mais encore à celui de dendritisation du laiton en s'incorporant dans les dendrites elles-mêmes (par formation de sulfures intermétalliques Cu-Zn-Co), selon des mécanismes complexes de réactions redox conduisant on le suppose à la corrosion du laiton, à la dissolution du métal et à son redépôt sous la forme de ces dendrites de sulfures métalliques (dendrites sulfurées). On pourra se reporter pour plus de détail à la publication RCT (Rubber Chemistry and Technology), vol. 78, pp 426-457, auteur W. Stephen Fulton, intitulée « Steel tire cord-rubber adhesion, including the contributtion of cobalt »).

Toutefois, il est aussi connu que la présence de ces composés de cobalt dans les compositions de caoutchouc rend ces dernières plus sensibles à l'oxydation et au vieillissement, tant et si bien que l'adhésion entre l'acier au carbone et la matrice de caoutchouc est également susceptible de s'affaiblir au cours du temps du fait de l'évolution progressive des sulfures formés, sous l'effet des différentes sollicitations rencontrées, notamment mécaniques et/ou thermiques, le processus de dégradation ci-dessus pouvant être accéléré en outre en présence d'humidité.

Leur incorporation augmente aussi significativement le coût des compositions de caoutchouc, sans compter qu'il est souhaitable de supprimer à terme le cobalt de ces compositions, en raison de l'évolution récente de la réglementation européenne, cobalt et sels de cobalt étant considérés comme relativement toxiques pour l'environnement.

Pour toutes les raisons exposées ci-dessus, les fabricants de composites métal / caoutchouc, en particulier les manufacturiers de pneumatiques sont à la recherche de solutions adhésives nouvelles pour faire coller les renforts métalliques aux compositions de caoutchouc, tout en palliant, au moins en partie, les inconvénients précités.

### 3. BREVE DESCRIPTION DE L'INVENTION

Or, au cours de leurs recherches, les Demanderesses ont trouvé un procédé de sulfuration de surface nouveau répondant à un tel objectif.

La présente invention concerne un procédé de sulfuration de surface d'un corps, dont la surface comporte une couche de métal dit métal de surface apte à former des sulfures, caractérisé en ce qu'il comporte au moins une étape de pyrolyse par projection de flamme d'un précurseur de soufre générant dans la flamme de l'hydrogène sulfuré.

Les renforts métalliques traités avec le procédé de l'invention présentent comme avantage majeur celui de pouvoir ensuite être collés directement, c'est-à-dire sans primaire d'adhésion ni ajout de sel métallique (en particulier sel de cobalt) à des matrices de caoutchouc insaturé tel que du caoutchouc naturel.

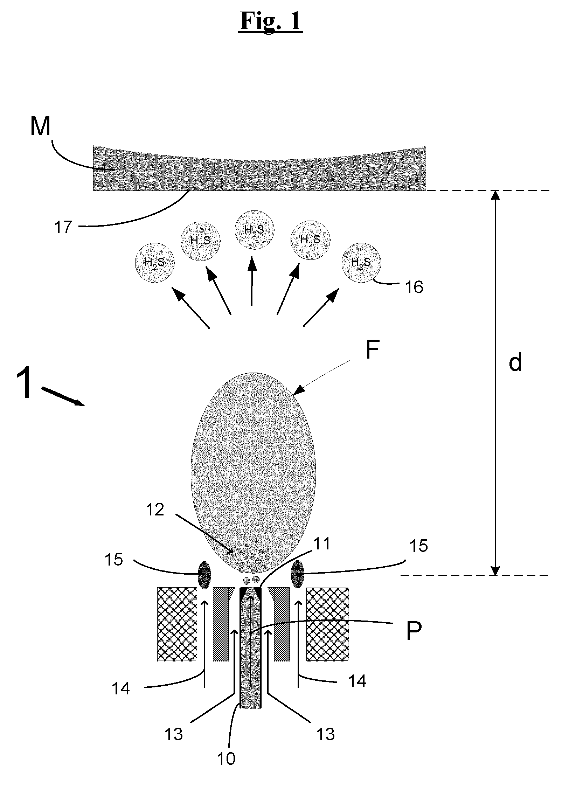

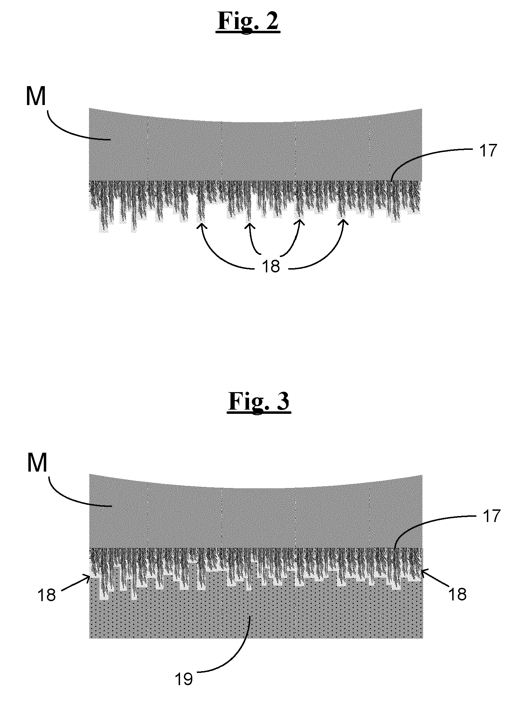

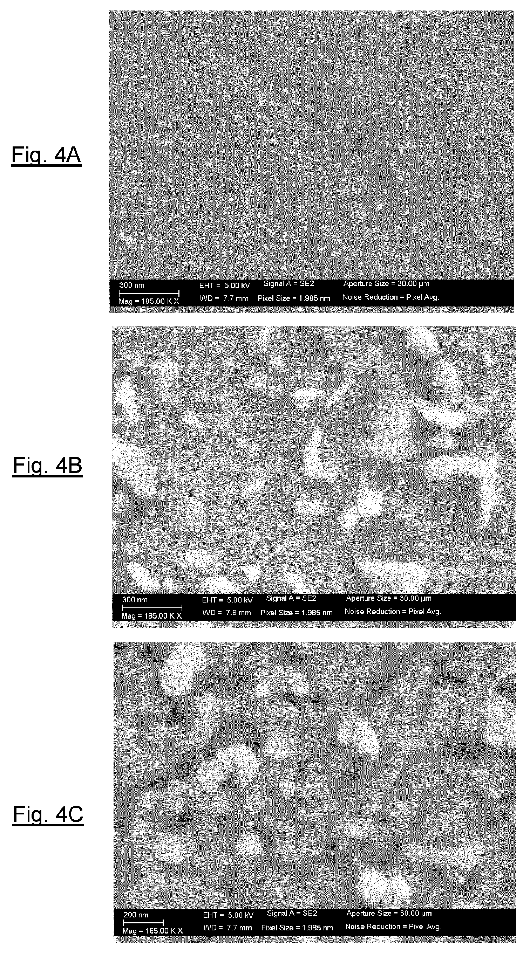

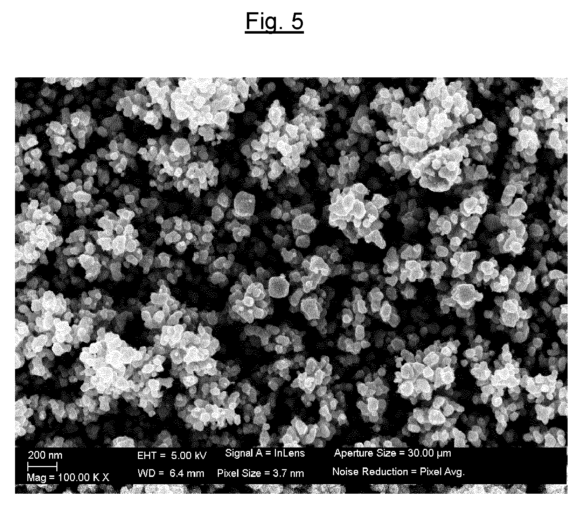

L'invention ainsi que ses avantages seront aisément compris à la lumière de la description détaillée et des exemples de réalisation qui suivent, ainsi que des figures relatives à ces exemples qui représentent ou schématisent :
- un schéma illustrant le principe du procédé FSP de l'invention ainsi qu'un exemple de dispositif utilisable pour la mise en oeuvre de ce procédé (Fig. 1) ;
- un schéma illustrant l'état de surface du métal M une fois traité FSP, avec formation de dendrites de nanoparticules sulfurées à la surface du métal (Fig. 2) ;
- un schéma illustrant l'ancrage d'une matrice de caoutchouc autour des dendrites précédemment formées grâce au traitement de surface FSP (Fig. 3) ;
- une reproduction de clichés de MEB, réalisés à la surface de fils en acier au carbone laitonné après traitement FSP, mettant en évidence la présence de nanoparticules ou dendrites à la surface des fils traités (Fig. 4) ;
- une reproduction d'un cliché de MEB, réalisé à la surface d'une plaque d'acier laitonné après deux étapes FSP consécutives, une première étape de dépôt de cuivre (Cu), une seconde étape conforme à l'invention de sulfuration du cuivre de surface par FSP, mettant aussi en évidence la présence de dendrites ou nanoparticules très fines à la surface de la plaque ainsi traitée (Fig. 5).

### 4. DESCRIPTION DETAILLEE DE L'INVENTION

Dans la présente description, sauf indication expresse différente, les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

L'invention concerne donc un procédé de sulfuration de surface d'un corps, quel qu'il soit, métallique ou non métallique, dont au moins la surface comporte, pour tout ou partie, une couche de métal dit métal de surface, ce métal de surface (noté ci-après « M ») étant apte à former des sulfures.

Ce traitement de surface a pour caractéristique essentielle de comporter une étape de pyrolyse par projection de flamme, en abrégé « FSP » (*Flame Spray Pyrolysis*), d'un précurseur donneur de soufre générant dans la flamme de l'hydrogène sulfuré.

Le gaz (H₂S) formé est propulsé, projeté par la flamme vers la surface du corps à traiter, d'où le nom attribué à cette technologie. Grâce au fort pouvoir oxydant du sulfure d'hydrogène vis-à-vis du métal de surface, des sulfures de métal sont ainsi formés.

Le procédé de l'invention est préférentiellement mis en oeuvre en vue de coller ultérieurement le corps ainsi traité à un caoutchouc éthyléniquement insaturé, c'est-à-dire vulcanisable (réticulable au soufre), tel qu'un élastomère diénique.

La pyrolyse par projection de flamme est une méthode aujourd'hui bien connue, qui a été essentiellement développée pour la synthèse de poudres ultrafines d'oxydes simples ou mixtes de divers métaux (e.g. SiO₂, Al₂O₃, B₂O₃, ZrO₂, GeO₂, WO₃, Nb₂O₅, SnO₂, MgO, ZnO, CeₓZr₍₁₋ₓ₎O₂), à morphologies contrôlées, et/ou leur dépôt sur divers substrats, ceci en partant d'une grande variété de précurseurs métalliques, généralement sous la forme de liquides pulvérisables, organiques ou inorganiques, de préférence inflammables ; les liquides pulvérisés dans la flamme, en se consumant, émettent notamment des nanoparticules d'oxydes métalliques qui sont projetées par la flamme elle-même sur ces divers substrats.

Le principe de cette méthode a été rappelé par exemple dans la publication récente (2011) de Johnson Matthey intitulée « Flame Spray Pyrolyzis : a Unique Facility for the Production of Nanopowders », Platinum Metals Rev., 2011, 55, (2), 149-151. De nombreuses variantes de procédés et réacteurs FSP ont été décrits également, à titre d'exemples, dans les brevets ou demandes de brevet US 5 958 361, WO 01/36332 ou US 6 887 566, WO 2004/005184 ou US 7 211 236, WO 2005/103900, WO 2007/028267 ou U 8 182 573, WO 2008/049954 ou US 8 231 369, US 2009/0123357, US 2009/0126604, US 2010/0055340, WO 2011/020204.

Toutefois, à la connaissance des Demanderesses, la méthode FSP n'avait jamais été utilisée à ce jour pour la sulfuration in-situ (c'est-à-dire sans nécessiter un apport externe de métal) de surfaces métalliques, particulièrement de surfaces à base de cuivre, zinc ou laiton.

Par sulfures de métal M, on entend de manière connue des composés que l'on peut noter symboliquement MₓS_{y} (dans cette expression générale, selon la stoechiométrie applicable et la nature du métal, x et y, identiques ou différents, sont des entiers non nuls, identiques ou différents de 1), ou encore noter de manière plus simple MₓS (dans cette expression, y étant par convention égal à 1, x est alors un nombre entier ou décimal différent de zéro). Il va de soi que cette définition englobe aussi les cas où plusieurs métaux différents (M représentant alors M1, M2, M3 ...) sont présents à la surface du corps traité, sous la forme de sulfures mixtes (par exemple du type M1ₓ₁M2ₓ₂M3ₓ₃S_{y}) de ces différents métaux.

Préférentiellement, le métal de surface M, par définition apte à former des sulfures, est choisi dans le groupe constitué par l'aluminium (Al), l'argent (Ag), le cobalt (Co), le cuivre (Cu), l'étain (Sn), le fer (Fe), le manganèse (Mn), le molybdène (Mo), le nickel (Ni), le zinc (Zn), et les alliages métalliques (par exemple binaires, ternaires ou quaternaires) comportant au moins un de ces éléments, ces alliages métalliques étant par conséquent eux-mêmes aptes à former des sulfures.

Plus préférentiellement, le métal de surface est choisi dans le groupe constitué par le cobalt, le cuivre, l'étain, le fer, le molybdène, le nickel, le zinc et les alliages métalliques comportant au moins un de ces éléments.

Plus préférentiellement encore, le métal de surface est choisi dans le groupe constitué par le cuivre, le zinc et les alliages comportant au moins un de ces éléments, c'est-à-dire les alliages de Cu et/ou de Zn. A titre d'éléments métalliques pouvant entrer dans la composition de tels alliages, en plus de Cu et/ou Zn, on citera en particulier ceux choisis dans le groupe constitué par le cobalt, l'étain, le fer, le molybdène et le nickel.

Le métal de surface est plus particulièrement choisi dans le groupe constitué par le cuivre, le zinc et le laiton (alliage Cu/Zn), donc par définition un métal apte à former des sulfures de Zinc (ZnS) ou de cuivre (CuₓS, x étant ici un nombre entier ou décimal variant de 1,0 à 2,0).

L'invention s'applique tout particulièrement à du laiton, en particulier dans les applications où le corps traité par le procédé de l'invention est un renfort métallique destiné à adhérer ultérieurement à une matrice de caoutchouc insaturé tel que du caoutchouc naturel, pour constituer un composite métal / caoutchouc tel que ceux usuellement rencontrés dans les articles en caoutchouc tels que des pneumatiques.

Par « précurseur de soufre » ou « précurseur donneur de soufre », apte à générer de l'hydrogène sulfuré (H₂S) lors de sa combustion dans la flamme, on entend dans la présente demande le produit qui est projeté dans la flamme, quelle que soit la forme ou la présentation de ce produit.

Il peut s'agir de soufre, d'un composé de départ soufré ou bien d'un produit plus complexe, par exemple une composition ou une solution, comportant du soufre sous quelque forme que ce soit. Il pourrait être solide, par exemple sous forme de poudre, projeté et fondu directement dans la flamme ; il est préférentiellement liquide à température ambiante (20°C). Il peut être organique ou inorganique, monosulfuré, disulfuré ou polysulfuré.

Si un composé de départ soufré est utilisé et que ce dernier n'est pas organique en tant que tel, il pourra être avantageusement dissous ou dispersé dans un solvant (tel que par exemple benzène, cyclohexane, styrène ou toluène) ou un liquide organique de manière à former un précurseur donneur de soufre qui peut être alors qualifié d'organique. De la même manière, si ce composé de départ soufré n'est pas liquide (par exemple sous forme de soufre solide), il pourra être avantageusement dispersé dans un solvant organique ou un autre liquide approprié de manière à former un précurseur donneur de soufre qui peut être qualifié de liquide.

Le précurseur de soufre est de préférence un composé organique, comportant plus préférentiellement de 1 à 15 atomes de carbone ; il peut être monosulfuré, disulfuré ou polysulfuré, notamment du type aliphatique, cycloaliphatique, saturé ou insaturé, ou aromatique. Plus préférentiellement encore, il s'agit d'un composé organique liquide à température ambiante, en particulier du type inflammable.

Plus préférentiellement, le précurseur de soufre est un composé organique dépourvu d'atome d'azote ; plus préférentiellement encore, il est également dépourvu d'atome d'oxygène et de manière très préférentielle, le précurseur de soufre est un composé organique dépourvu d'hétéroatome autre que du soufre. Ainsi, de manière très préférentielle, le précurseur de soufre est un composé organique exclusivement constitué d'atomes de carbone, de soufre et d'hydrogène.

Parmi les nombreux exemples de composés organiques liquides répondant aux définitions préférentielles ci-dessus, on peut notamment citer les composés de formules I à XXIV ci-dessous, et leurs dérivés, c'est-à-dire les composés incluant dans leur structure chimique les entités de formule I à XXIV.

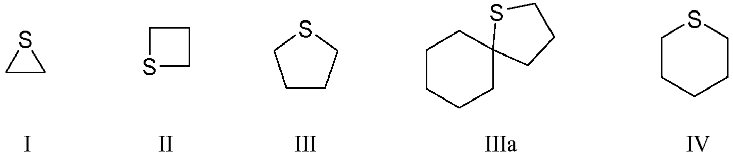

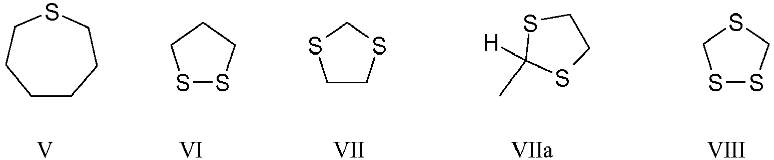

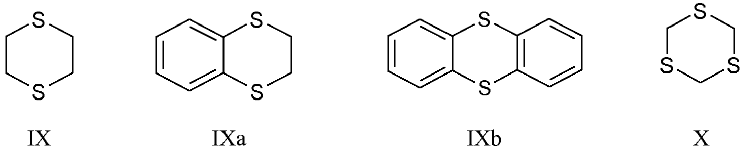

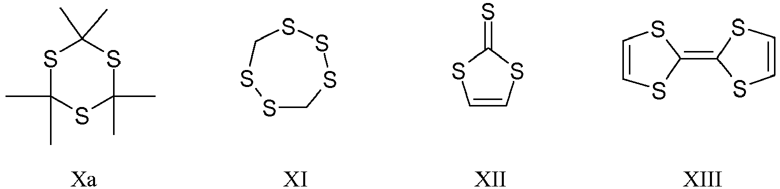

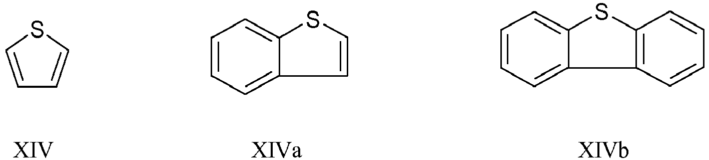

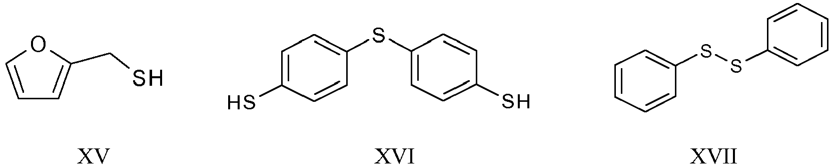

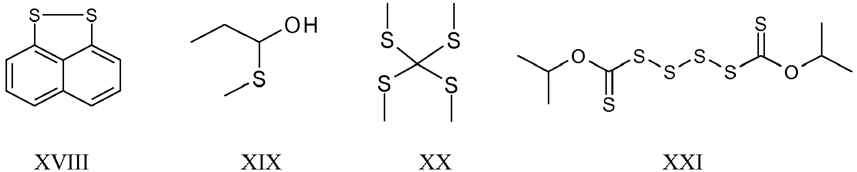

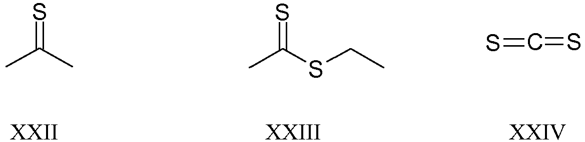

Plus préférentiellement encore, le précurseur donneur de soufre organique est choisi dans le groupe constitué par les composés suivants :
- thiophène (formules XIV), et ses dérivés (e.g. formules XIVa ou XIVb) ;
- composés thiocarbonylés (e.g. formules XII, XXI, XXII, XXIII et XXIV) ;
- thiols aliphatiques ou aromatiques (e.g. formules XV et XVI) ;
- disulfures organiques, aliphatiques ou aromatiques (e.g. formules VI, VIII, XVII, XVIII, XXIV) ;
- polysulfures organiques, aliphatiques ou aromatiques (e.g. formules XI, XXI) ;
- thioéthers acycliques (e.g. formules XVI, XIX, XX), ou cycliques tels que :
   o thiiranes (formule I) et ses dérivés,
   o thiéthane (formule II) et ses dérivés,
   o thiolane (formule III) et ses dérivés (e.g. formule IIIa),
   o thiane (formule IV) et ses dérivés,
   o thiépane (formule V) et ses dérivés,
   o dithiolanes (e.g. formule VII) et ses dérivés (e.g. formule VIIa),
   o trithiolane (formule VIII), et ses dérivés,
   o dithianes (e.g. formule IX) et leurs dérivés (e.g. formules IXa et IXb),
   o trithianes (e.g. formule X) et leurs dérivés (e.g. formule Xa) ;
- thioesters (e.g. formule XXIII);
- et les mélanges de tels composés.

Plus préférentiellement encore, ce précurseur donneur de soufre organique est choisi dans le groupe constitué par le thiophène et ses dérivés, les disulfures organiques, aliphatiques ou aromatiques, les polysulfures organiques aliphatiques ou aromatiques, les thioéthers acycliques ou cycliques, et les mélanges de tels composés.

Plus particulièrement encore, le précurseur donneur de soufre est du thiophène ou un dérivé du thiophène. Ce composé organique soufré, de formule C₄H₄S, volatile et inflammable, a ici la fonction directe de donneur de soufre ; il est avantageusement utilisable aussi comme solvant organique.

Le traitement FSP peut être conduit à toute température, bien entendu inférieure à la température de fusion du métal M. Il pourrait être conduit à basse température, en particulier à une température proche de la température ambiante (23°C). Toutefois, pour optimiser la durée et l'efficacité du traitement, la température du métal de surface, pendant la sulfuration, est préférentiellement comprise entre 50°C et 500°C, plus préférentiellement entre 100°C et 350°C.

La figure 1 annexée illustre de manière très schématique, sans respect d'une échelle spécifique, le principe du procédé FSP (pyrolyse par projection de flamme) de l'invention ainsi qu'un exemple de dispositif (1) utilisable pour la mise en oeuvre de ce procédé.

Le principe de la méthode est d'injecter un précurseur donneur de soufre (P) puis de le pulvériser dans une flamme à l'aide d'un gaz propulseur et oxydant ; la combustion du précurseur (P) dans la flamme (F) permet la formation de l'espèce visée (ici, conformément à l'invention, de l'hydrogène sulfuré H₂S).

Le dispositif 1 de cet exemple comporte essentiellement trois alimentations respectives :
- des moyens d'atomisation (10, 11), comportant au moins un capillaire (10) et une buse (11) d'alimentation en combustible ou précurseur (P), ici sous une forme liquide, dont la fonction est d'éjecter, pulvériser le précurseur sous la forme de fines gouttelettes (12), la forme du jet étant dictée par les conditions particulières d'atomisation ; ces moyens d'atomisation (10, 11) sont bien entendu précédés d'une pompe de dimensionnement adapté (dans les exemples qui suivent, une micropompe volumétrique rotative gérotor, modèle mzr-2905 de la société HNP Mikrosysteme GmbH), non représentée sur cette figure pour simplification ;
- une alimentation en gaz d'oxydation (13) (à l'aide d'une pompe non représentée sur le schéma) éjectant le gaz oxydant dans la zone de sortie de la buse d'alimentation (11), dont la fonction est d'une part de propulser les gouttelettes (12) dans la flamme (F), d'autre part d'oxyder le précurseur (P) pour le transformer en hydrogène sulfuré (H₂S) ;
- enfin une alimentation en gaz support (gaz d'allumage et de combustion) (14), par exemple un mélange de méthane et d'oxygène, alimentant deux petites flammes (flammes secondaires) (15) destinées quant à elles à enflammer les gouttelettes (12) de précurseur (P) pour formation de la flamme principale (F).

C'est donc la flamme (F) générée par le gaz de combustion (14) et le gaz oxydant (13) qui constitue le réacteur FSP, réacteur thermique à très haute température puisque la température à l'intérieur de la flamme (F), selon les conditions opératoires préférentielles données ci-dessus, est supérieure à 500°C, par exemple comprise entre 600°C et 800°C.

C'est la combustion dans la flamme (F) du précurseur soufré (P) en présence d'oxygène (13), qui va générer le sulfure d'hydrogène (16) visé, ainsi que d'autres espèces gazeuses selon la nature particulière du précurseur utilisé, ces espèces étant de préférence neutres ou réductrices comme expliqué plus en détail ci-après.

L'homme du métier comprendra que le traitement de sulfuration FSP est ici mis en oeuvre dans une atmosphère « pauvre en oxygène » (conditions dites de « flamme réductrice » ou « atmosphère réductrice »), c'est-à-dire avec le minimum d'oxygène nécessaire (on tend vers une combustion incomplète), sans quoi il n'y aurait pas formation d'hydrogène sulfuré (et d'autres espèces gazeuses réductrices) ; de préférence, le taux d'oxygène dans la chambre de combustion (mesuré immédiatement en sortie de chambre) est inférieur à 200 ppm, en particulier compris dans un domaine de 5 à 200 ppm, de préférence inférieur à 100 ppm, en particulier compris dans un domaine de 10 à 100 ppm. La totalité de la chambre de combustion (dans les exemples qui suivent, une simple boîte à gants fermée, aménagée) est donc balayée par un courant de gaz inerte tel que de l'azote. La hauteur de la flamme principale (F) est typiquement comprise entre 5 et 10 cm.

La flamme est placée, en fonction de l'intensité du traitement désirée, à une distance variable de la surface (17) du métal M à traiter, distance que l'homme du métier pourra aisément définir en fonction des conditions particulières de mise en oeuvre de l'invention. Cette distance notée « d » sur la fig. 1, mesurée entre la base de la flamme (F) et la surface (17) du métal M est de préférence comprise entre 50 et 250 mm, notamment entre 60 et 180 mm.

C'est la flamme (F), grâce à son énergie cinétique, qui sert de propulseur du gaz H₂S (16) vers la surface (17) du métal M à traiter. En d'autres termes, conformément à l'invention, on génère un gaz (H₂S) que l'on projette et qui attaque chimiquement le métal M avec ce gaz.

Ici, ce qui est une particularité du procédé de l'invention, il y a création de sulfures métalliques MₓS par érosion, sans qu'aucun apport externe de métal ne soit nécessaire, contrairement aux techniques FSP de l'art antérieur (synthèse d'oxydes métalliques) évoquées en introduction du présent mémoire.

La durée du traitement est typiquement de quelques secondes à quelques minutes, préférentiellement de quelques secondes à quelques dizaines de secondes, en fonction des conditions particulières de mise en oeuvre de l'invention, selon notamment la nature du métal M, selon que le corps traité est fixe ou au contraire se déplace devant la flamme à une vitesse donnée pouvant par exemple varier de quelques dizaines de cm/min à plusieurs dizaines de m/min.

Les installations utilisables pour la mise en oeuvre du procédé de l'invention ne sont bien entendu pas limitées aux exemples et modes de réalisation décrits ci-dessus.

C'est ainsi que pour traiter des surfaces importantes et/ou des quantités importantes de pièces telles que par exemple des fils, câbles, films ou plaques, en particulier à vitesse élevée, les installations utilisées pourraient comporter une combinaison de plusieurs flammes en ligne.

L'invention s'applique également aux cas où d'autres espèces formées dans la flamme (F) ou une (au moins une) autre flamme, notamment des espèces non gazeuses comme par exemple des particules de métal ou d'oxyde métallique, apportées par des précurseurs autres que le précurseur donneur de soufre précédemment décrit, seraient projetées, simultanément ou non, à la surface du métal M à traiter.

La figure 2 représente de manière très schématique l'état de surface du métal M une fois qu'il a été traité FSP comme indiqué précédemment.

Suite à l'attaque chimique (érosion) par le gaz H₂S, une rugosité très spécifique que l'on peut qualifier de « nanorugosité » (par analogie avec ce que l'on a coutume de dénommer microrugosité) est obtenue : la surface (17) du métal M s'est pourvue d'une multitude de nanoparticules de sulfure métallique MₓS (en l'occurrence CuₓS et ZnS dans le cas où M est du laiton) de taille nanométrique, généralement agglomérées sous forme de dendrites (18) elles-mêmes de taille nanométrique.

Par « nanoparticule » on entend par définition des particules dont la taille (diamètre ou plus grande dimension dans le cas de particules anisométriques) est supérieure à 1 nm (nanomètre) et inférieure à 1 µm (micromètre), par opposition notamment à des particules dites microparticules dont la taille est égale ou supérieure à 1 µm.

Les nanoparticules décrites ici peuvent se présenter à l'état élémentaire, isolé ; le plus souvent elles se présentent sous la forme d'agglomérats de telles nanoparticules, aussi appelés « dendrites ». De tels agglomérats (clusters, paquets) de nanoparticules sont susceptibles, de manière connue, de se désagglomérer en ces nanoparticules sous l'effet d'une force externe, par exemple sous l'action d'un travail mécanique. Par "nanoparticule", il faut donc entendre l'ensemble insécable (i.e., qui ne peut être coupé, divisé, partagé) qui est produit lors de la formation, de la synthèse ou croissance des nanoparticules.

Les nanoparticules en tant que telles (élémentaires) ont une taille moyenne (diamètre ou plus grande dimension dans le cas de particules anisométriques) qui est de préférence comprise entre 5 et 400 nm, plus préférentiellement comprise dans un domaine de 10 à 200 nm, en particulier comprise dans un domaine de 10 à 100 nm (moyenne calculée en nombre).

Quant aux agglomérats ou dendrites de nanoparticules, leur taille moyenne (diamètre ou plus grande dimension dans le cas de dendrites anisométriques) est de préférence comprise entre 20 et 800 nm, plus préférentiellement comprise dans un domaine de 30 à 600 nm, en particulier comprise dans un domaine de 40 à 400 nm (moyenne calculée en nombre).

Grâce au traitement de sulfuration FSP de l'invention dont le but, rappelons-le, est de faire adhérer solidement le métal de surface à une matrice de polymère éthyléniquement insaturé (donc réticulable au soufre), on obtient un corps (en particulier un renfort tel que fil, câble, film ou plaque) à surface au moins en partie métallique (en particulier laitonnée), qui peut être qualifié de « prêt à l'emploi » : à ce stade, ce corps ou renfort est dépourvu de toute matrice de polymère ou caoutchouc à sa périphérie ; il est prêt à être utilisé tel quel, sans aucun primaire d'adhésion ni activateur d'adhésion tel qu'un sel de cobalt, comme élément de renforcement d'une matrice de polymère ou caoutchouc insaturé tel que du caoutchouc naturel.

La figure 3 schématise l'ancrage d'une matrice de caoutchouc (19) autour des dendrites (18) précédemment formées grâce au traitement de surface FSP, avec une représentation bien entendu fortement simplifiée de l'interphase métal / caoutchouc une fois que la surface (17) du métal (M) est entrée au contact de la matrice de caoutchouc (19) (par exemple une composition de caoutchouc à base d'un élastomère diénique tel que du caoutchouc naturel) et que l'ensemble a été ensuite vulcanisé.

La présence de ces nanoparticules et dendrites (18) de sulfures métalliques MₓS, permet d'obtenir une adhésion forte et pérenne entre le métal M et le caoutchouc, comme cela est notamment démontré dans les exemples de réalisation qui suivent.

### 5. EXEMPLES DE REALISATION DE L'INVENTION

### Essai I

Lors d'un premier essai, une plaque en acier au carbone laitonné (Cu/Zn : 60/40) a été soumise à un traitement FSP selon l'invention, mis en oeuvre à l'aide du dispositif schématisé à la figure 1 (boîte à gants fermée balayée par un courant d'azote) dans une atmosphère pauvre en oxygène (teneur en O₂ dans la chambre de combustion, mesurée immédiatement en sortie de chambre, inférieure à 100 ppm).

La plaque d'épaisseur égale à environ 3 mm (épaisseur de la couche de laiton comprise entre 200 et 500 nm) était immobile et a été traitée pendant une durée de 5 s, à une distance « d » de la flamme égale à environ 70 mm.

La chambre de combustion 1 était ici alimentée en continu par environ 5 ml/min de thiophène pur (précurseur P), 5 l/min d'oxygène (gaz d'oxydation 13) et un mélange de méthane et d'oxygène (gaz support 14) (CH₄ : 1,2 l/min ; O₂ : 2,2 l/min). La hauteur de la flamme (F) était comprise entre 6 et 7 cm, la température à l'intérieur de la flamme était égale à environ 700°C.

Dans le présent exemple de réalisation, et pour les diverses conditions opératoires ci-dessus, la combustion et l'oxydation du précurseur P (thiophène) a conduit à une composition gazeuse, mesurée immédiatement en sortie de chambre par spectrométrie de masse (Pfeiffer Quadstar 100) qui était la suivante : environ 10 ppm de H₂S, 500 ppm de SO₂, moins de 100 ppm de O₂, 1% de H₂O, 1% de H₂, 0,5% de CO₂ (% molaire).

Il est à noter que, dans d'autres essais, le thiophène a été utilisé à l'état dilué (par exemple à 10% en poids) dans un solvant organique (par exemple un mélange de 1 part de THF pour 2 parts d'acide 1,2-éthyl-hexanoïque), ceci en maintenant constant le ratio du volume de gaz dispersant (5 l/min de O₂) sur le volume de combustible (5 ml/min de thiophène ou d'équivalent thiophène dans le cas d'une dilution).

Puis la plaque en acier laitonné ainsi traitée FSP, une fois refroidie, a été disposée en sandwich entre deux couches d'une composition de caoutchouc conventionnelle pour armature de ceinture de pneumatique tourisme, à base de caoutchouc naturel, de noir de carbone et silice à titre de charge, et d'un système de vulcanisation (soufre et accélérateur sulfénamide) ; cette composition étant dépourvue de sel de cobalt.

Puis l'éprouvette de composite métal/caoutchouc ainsi préparée a été placée sous presse et le tout cuit à 165°C pendant 30 min sous une pression de 20 bar.

Après vulcanisation du caoutchouc, on a obtenu un excellent collage entre la matrice de caoutchouc et la plaque de métal malgré l'absence de sel de cobalt dans la matrice de caoutchouc : lors de tests de pelage conduits à la fois à température ambiante (23°C) et à haute température (100°C), on a constaté en effet que la rupture se produisait systématiquement dans la matrice de caoutchouc elle-même et non à l'interface entre métal et caoutchouc.

Il est essentiel de noter que lors d'essais comparatifs, conduits dans les mêmes conditions (pas de sel de cobalt dans la matrice de caoutchouc) hormis l'absence du traitement FSP selon l'invention, on a constaté que la plaque de laiton ne collait pas au caoutchouc.

### Essai II

D'autres traitements FSP conformes à l'invention ont été conduits, dans les mêmes conditions de flamme que précédemment, cette fois sur des fils en acier au carbone laitonné (diamètre d'environ 0,30 mm) à haute résistance (pour câbles type « Steelcord » pour pneumatique).

Lors du traitement, ces fils défilaient en continu, grâce à un robot motorisé, à une vitesse constante (ici, dans ces exemples, à 60 cm/min) et à une distance « d » de la base de la flamme qui pouvait varier, automatiquement, dans une large plage de valeurs.

La figure 4 annexée reproduit les trois clichés de MEB (5 kV ; grossissement 185 000) qui ont été réalisés à la surface des fils ainsi traités. La surface (laiton M) de la plaque, lors de son traitement, était située respectivement à une distance « d » égale à 200 mm (fig. 4A), 150 mm (fig. 4B) et 100 mm (fig. 4C) de la flamme.

Sur ces reproductions de la figure 4, 1 cm équivaut à environ 200 nm (nanomètres). Sur chacun de ces trois clichés est visible une nanorugosité de surface plus ou moins marquée, se présentant sous la forme de nanoparticules plus ou moins agglomérées dont on peut voir aisément que la taille, typiquement de quelques dizaines (fig. 4A) à quelques centaines de nm (maximum de 400 nm environ dans ces exemples) (fig. 4A et 4B), augmente lorsque la distance « d » diminue, c'est-à-dire que l'intensité du traitement FSP augmente.

On a analysé par EDS (5 kV) la surface des fils ainsi traités. Cette technique EDS (*Energy Dispersive Spectroscopy*) permet, on le rappelle, de déterminer le % massique de chaque élément présent en surface de l'échantillon analysé. On l'a utilisée pour mesurer le taux de sulfuration de la surface après le traitement FSP : pour les trois conditions ci-dessus (respectivement fig. 4A, 4B et 4C), le taux de soufre mesuré était respectivement d'environ 5,5%, 12% et 25% en poids. L'analyse sur fil témoin non traité a indiqué l'absence de soufre (en tout cas, en dessous de la limite de détection).

### Essai III

La figure 5 annexée reproduit un cliché de MEB (5 kV - grossissement 100 000), réalisé à la surface d'une plaque en acier au carbone laitonné identique à celle de l'essai 1, mais ayant subi un traitement conforme à l'invention comportant cette fois 2 étapes FSP consécutives :
- une première étape de synthèse et dépôt de nanoparticules de cuivre, selon une méthode de dépôt (par apport externe de métal) en soi connue, telle que décrite en introduction du présent mémoire ; le précurseur de cuivre était constituée par une solution d'éthylhexanoate de cuivre dans un solvant organique (THF) ; puis
- une seconde étape conforme à l'invention de sulfuration de la surface ainsi préalablement cuivrée, selon la méthode FSP (attaque par H₂S pour formation de sulfures de cuivre CuₓS) décrite à l'essai I (mêmes conditions opératoires). La plaque, lors de son traitement, était située à une distance « d » égale à environ 70 mm de la flamme.

Sur cette reproduction de la fig. 5, 7 mm environ équivalent à 200 nm. Ce cliché met lui aussi très clairement en évidence la présence d'une nanorugosité de surface, particulièrement fine, sous la forme de nanoparticules, agglomérées sous forme de dendrites ; on peut voir aisément que la taille moyenne de ces nanoparticules, mesurée dans le plan du cliché, est nettement inférieure à 200 nm.

La présence de ces dendrites (18) de sulfures métalliques (CuₓS) permet d'obtenir une adhésion forte et pérenne entre le métal M et le caoutchouc (19), grâce à un fort ancrage mécanique et chimique, tel qu'illustré à la fig. 3 commentée précédemment. Ainsi peuvent être supprimés les sels de cobalt, ou autres sels métalliques en tant que promoteurs d'adhésion, dans les compositions de caoutchouc destinées à être reliées à des renforts métalliques laitonnés.

Le procédé de l'invention présente de nombreux avantages :
- la quantité de soufre (sous forme des nanoparticules et dendrites sulfurées) déposée à la surface 17 du métal M (donc à l'interphase future métal / caoutchouc dans les applications de renforcement de caoutchouc), la taille et la géométrie des nanoparticules et dendrites de sulfures métalliques (18), peuvent être aisément ajustées par les paramètres opératoires du réacteur FSP ;
- ceci sans avoir à intervenir sur la formulation, notamment sur le système de vulcanisation, de la matrice de caoutchouc destinée à enrober ultérieurement le métal ;
- on pourra ainsi déposer des quantités importantes de sulfures métalliques MₓS, en particulier de cuivre et/ou de zinc, à la surface du métal M (en particulier laiton), sans risque de pénaliser par ailleurs les propriétés de caoutchouterie ;
- des nanoparticules de métal (e.g. cuivre, zinc, cobalt) autres que des nanoparticules de sulfures métalliques (MₓS) peuvent être avantageusement ajoutées, incorporées aux dendrites de sulfures, en vue d'améliorer encore, si besoin est, la performance adhésive du renfort.

## Revendications

1. Procédé de sulfuration de surface d'un corps, dont la surface comporte une couche de métal dit métal de surface apte à former des sulfures, **caractérisé en ce que** ce procédé comporte au moins une étape de pyrolyse par projection de flamme d'un précurseur de soufre générant dans la flamme de l'hydrogène sulfuré.

2. Procédé selon la revendication 1, dans lequel le métal de surface est choisi dans le groupe constitué par l'aluminium, l'argent, le cobalt, le cuivre, l'étain, le fer, le manganèse, le molybdène, le nickel, le zinc, et les alliages comportant au moins un de ces éléments.

3. Procédé selon la revendication 2, dans lequel le métal de surface est choisi dans le groupe constitué par le cuivre, le zinc et les alliages comportant au moins un de ces éléments.

4. Procédé selon la revendication 3, dans lequel le métal de surface est du laiton.

5. Procédé selon l'une quelconque des revendications 1 à 4, dans lequel le précurseur de soufre est liquide.

6. Procédé selon l'une quelconque des revendications 1 à 5, dans lequel le précurseur de soufre est du soufre ou un composé organique donneur de soufre comportant de préférence de 1 à 15 atomes de carbone.

7. Procédé selon les revendications 5 et 6, dans lequel le composé organique est liquide et choisi dans le groupe constitué par les composés monosulfurés, disulfurés ou polysulfurés, de type aliphatiques, cycloaliphatiques, saturés ou insaturés, ou aromatiques.

8. Procédé selon la revendication 7, dans lequel le composé organique est choisi dans le groupe constitué par le thiophène et ses dérivés, les composés thiocarbonylés, les thiols aliphatiques ou aromatiques, les disulfures organiques aliphatiques ou aromatiques, les polysulfures organiques aliphatiques ou aromatiques, les thioéthers acycliques ou cycliques, les thioesters, et les mélanges de tels composés.

9. Procédé selon la revendication 8, dans lequel le composé organique est choisi dans le groupe constitué par le thiophène et ses dérivés, les disulfures organiques aliphatiques ou aromatiques, les polysulfures organiques aliphatiques ou aromatiques, les thioéthers acycliques ou cycliques, et les mélanges de tels composés.

10. Procédé selon l'une quelconque des revendications 6 à 9, dans lequel le composé organique est un composé dépourvu d'atome d'azote.

11. Procédé selon la revendication 10, dans lequel le composé organique est un composé dépourvu d'atome d'oxygène.

12. Procédé selon la revendication 11, dans lequel le composé organique est un composé exclusivement constitué d'atomes de carbone, de soufre et d'hydrogène.

13. Procédé selon la revendication 12, dans lequel le composé organique est du thiophène ou un dérivé du thiophène.

14. Procédé selon l'une quelconque des revendications 1 à 13, dans lequel la température en surface du métal de surface, lors du traitement de sulfuration, est comprise entre 50°C et 500°C, de préférence entre 100°C et 350°C.

15. Procédé selon l'une quelconque des revendications 1 à 14, dans lequel le corps est un fil, un câble, un film ou une plaque.

## Patentansprüche

1. Verfahren zur Oberflächensulfurierung eines Körpers, dessen Oberfläche eine Schicht aus Metall, das als Oberflächenmetall bezeichnet wird und zur Bildung von Sulfiden befähigt ist, umfasst, **dadurch gekennzeichnet, dass** das Verfahren mindestens einen Schritt der Flammenspraypyrolyse einer Schwefelvorstufe, die in der Flamme Schwefelwasserstoff bildet, umfasst.

2. Verfahren nach Anspruch 1, bei dem das Oberflächenmetall aus der Gruppe bestehend aus Aluminium, Silber, Cobalt, Kupfer, Zinn, Eisen, Mangan, Molybdän, Nickel, Zink und Legierungen, die mindestens eines dieser Elemente umfassen, ausgewählt ist.

3. Verfahren nach Anspruch 2, bei dem das Oberflächenmetall aus der Gruppe bestehend aus Kupfer, Zink und Legierungen, die mindestens eines dieser Elemente umfassen, ausgewählt wird.

4. Verfahren nach Anspruch 3, bei dem es sich bei dem Oberflächenmetall um Messing handelt.

5. Verfahren nach einem der Ansprüche 1 bis 4, bei dem die Schwefelvorstufe flüssig ist.

6. Verfahren nach einem der Ansprüche 1 bis 5, bei dem es sich bei der Schwefelvorstufe um Schwefel oder eine schwefelabgebende organische Verbindung, die vorzugsweise 1 bis 15 Kohlenstoffatome umfasst, handelt.

7. Verfahren nach den Ansprüchen 5 und 6, bei dem die organische Verbindung flüssig ist und aus der Gruppe bestehend aus Monosulfid-, Disulfid- und Polysulfidverbindungen vom aliphatischen, cycloaliphatischen, gesättigten oder ungesättigten oder aromatischen Typ ausgewählt wird.

8. Verfahren nach Anspruch 7, bei dem die organische Verbindung aus der Gruppe bestehend aus Thiophen und dessen Derivaten, Thiocarbonylverbindungen, aliphatischen oder aromatischen Thiolen, aliphatischen oder aromatischen organischen Disulfiden, aliphatischen oder aromatischen organischen Polysulfiden, acyclischen oder cyclischen Thioethern oder Thioestern und Mischungen derartiger Verbindungen ausgewählt wird.

9. Verfahren nach Anspruch 8, bei dem die organische Verbindung aus der Gruppe bestehend aus Thiophen und dessen Derivaten, aliphatischen oder aromatischen organischen Disulfiden, aliphatischen oder aromatischen organischen Polysulfiden, acyclischen oder cyclischen Thioethern und Mischungen derartiger Verbindungen ausgewählt wird.

10. Verfahren nach einem der Ansprüche 6 bis 9, bei dem es sich bei der organischen Verbindung um eine Verbindung ohne Stickstoffatome handelt.

11. Verfahren nach Anspruch 10, bei dem es sich bei der organischen Verbindung um eine Verbindung ohne Sauerstoffatome handelt.

12. Verfahren nach Anspruch 11, bei dem es sich bei der organischen Verbindung um eine Verbindung handelt, die ausschließlich aus Kohlenstoff-, Schwefel- und Wasserstoffatomen besteht.

13. Verfahren nach Anspruch 12, bei dem es sich bei der organischen Verbindung um Thiophen oder ein Thiophenderivat handelt.

14. Verfahren nach einem der Ansprüche 1 bis 13, bei dem die Oberflächentemperatur des Oberflächenmetalls bei der Sulfurierungsbehandlung zwischen 50°C und 500°C, vorzugsweise zwischen 100°C und 350°C, liegt.

15. Verfahren nach einem der Ansprüche 1 bis 14, bei dem es sich bei dem Körper um einen Draht, ein Kabel, eine Folie oder eine Platte handelt.

## Claims

1. Process for the surface sulphurization of a body, the surface of which comprises a layer of metal, referred to as surface metal, capable of forming sulphides, **characterized in that** this process comprises at least one stage of flame spray pyrolysis of a sulphur precursor which generates hydrogen sulphide in the flame.

2. Process according to Claim 1, in which the surface metal is chosen from the group consisting of aluminium, silver, cobalt, copper, tin, iron, manganese, molybdenum, nickel, zinc and the alloys comprising at least one of these elements.

3. Process according to Claim 2, in which the surface metal is chosen from the group consisting of copper, zinc and the alloys comprising at least one of these elements.

4. Process according to Claim 3, in which the surface metal is brass.

5. Process according to any one of Claims 1 to 4, in which the sulphur precursor is liquid.

6. Process according to any one of Claims 1 to 5, in which the sulphur precursor is sulphur or a sulphur-donating organic compound preferably comprising from 1 to 15 carbon atoms.

7. Process according to Claims 5 and 6, in which the organic compound is liquid and is chosen from the group consisting of monosulphide, disulphide or polysulphide compounds of saturated or unsaturated aliphatic or cycloaliphatic type or aromatic type.

8. Process according to Claim 7, in which the organic compound is chosen from the group consisting of thiophene and its derivatives, thiocarbonyl compounds, aliphatic or aromatic thiols, aliphatic or aromatic organic disulphides, aliphatic or aromatic organic polysulphides, acyclic or cyclic thioethers, thioesters, and the mixtures of such compounds.

9. Process according to Claim 8, in which the organic compound is chosen from the group consisting of thiophene and its derivatives, aliphatic or aromatic organic disulphides, aliphatic or aromatic organic polysulphides, acyclic or cyclic thioethers, and the mixtures of such compounds.

10. Process according to any one of Claims 6 to 9, in which the organic compound is a compound devoid of a nitrogen atom.

11. Process according to Claim 10, in which the organic compound is a compound devoid of an oxygen atom.

12. Process according to Claim 11, in which the organic compound is a compound consisting exclusively of carbon, sulphur and hydrogen atoms.

13. Process according to Claim 12, in which the organic compound is thiophene or a thiophene derivative.

14. Process according to any one of Claims 1 to 13, in which the surface temperature of the surface metal, during the sulphurization treatment, is between 50°C and 500°C, preferably between 100°C and 350°C.

15. Process according to any one of Claims 1 to 14, in which the body is a thread, a cord, a film or a plate.
